# EUROPEAN PATENT APPLICATION

(11) **EP 4 489 131 A1**
(43) Date of publication of application: **08.01.2025**
(21) Application number: 23759762.0
(22) Date of filing: 13.02.2023
(51) Int. Cl.: H01M 4/525, H01M 4/36, H01M 4/505, H01M 4/58, H01M 10/052, H01M 10/0566

(54) **SECONDARY BATTERY**

(30) Priority: 28.02.2022 JP 2022030167
(71) Applicant: Panasonic Intellectual Property Management Co., Ltd., Osaka-shi, Osaka 540-6207 (JP)
(72) Inventor: TSUJITA, Takuji, Kadoma-shi, Osaka 571-0057 (JP); NAKAMA, Yoshimasa, Kadoma-shi, Osaka 571-0057 (JP)
(74) Representative: Novagraaf International SA
(86) International application number: PCT/JP2023/004855
(87) International publication number: WO 2023/162759

(57) **Abstract**

A secondary battery 10 according to the present disclosure includes a positive electrode 11, a negative electrode 12, and an electrolytic solution. The positive electrode 11 includes a positive electrode active material and a coating material for coating at least a part of the surface of the positive electrode active material. The coating material includes Li, Ti, M1, and X, where the M1 is at least one selected from the group consisting of Ca, Mg, Al, Y, and Zr, the X is at least one selected from the group consisting of F, Cl, Br, and I, and the electrolytic solution includes an electrolyte and a non-aqueous solvent.

## Description

### TECHNICAL FIELD

The present disclosure relates to a secondary battery.

### BACKGROUND ART

Non-aqueous electrolyte secondary batteries, typified by lithium ion secondary batteries, have high energy density and high output. Such secondary batteries are regarded as promising as electric power sources for mobile devices such as smartphones, power sources for automobiles such as electric vehicles, and energy storage units for natural energy such as sunlight, for example. For example, a composite oxide including lithium and a transition metal is used as the positive electrode active material of a non-aqueous electrolyte secondary battery.

Patent Literature 1 proposes forming a coating layer on a surface of a composite oxide for the purpose of improving cycle characteristics and rate characteristics, where the composite material including lithium and a transition metal is a positive electrode active material of a non-aqueous electrolyte secondary battery, and the coating layer includes a metallic oxide and a compound including Li and P. The metallic oxide includes at least one metal element selected from the group consisting of Group 3, Group 13 and lanthanoid of the periodic table. Examples of the compound including Li and P include Li₃PO₄, Li₄P₂O₇, and Li₃PO₃.

### CITATION LIST

### Patent Literature

Patent Literature 1: WO 2013/047877

### SUMMARY OF INVENTION

### Technical Problem

The present disclosure provides a secondary battery including a novel coating layer.

### Solution to Problem

A secondary battery of the present disclosure includes:
a positive electrode,
a negative electrode, and
an electrolytic solution, wherein
the positive electrode includes a positive electrode active material and a coating material coating at least a part of a surface of the positive electrode active material,
the coating material includes Li, Ti, M1, and X,
the M1 is at least one selected from the group consisting of Be, Mg, Ca, Sr, Ba, Sc, Y, Al, Ga, In, Zr, and Sn, and the X is at least one selected from the group consisting of F, Cl, Br, and I, and
the electrolytic solution includes an electrolyte and a non-aqueous solvent.

### Advantageous Effects of Invention

The present disclosure can provide a secondary battery including a novel coating layer.

### BRIEF DESCRIPTION OF DRAWINGS

FIG. 1 is a longitudinal cross-sectional view schematically showing a secondary battery 10 according to an embodiment of the present disclosure.
FIG. 2 is a graph showing charge and discharge curves at a first cycle for batteries in Example 1 and Comparative Example 1.
FIG. 3 is a graph showing charge and discharge curves at a 50^{th} cycle for batteries in Example 1 and Comparative Example 1.
FIG. 4 is a graph showing transitions of discharge capacity of batteries in Example 1 and Comparative Example 1.

### DESCRIPTION OF EMBODIMENTS

### (Findings underlying the present disclosure)

As described in the paragraph of Background Art, Patent Literature 1 proposes forming a coating layer on a surface of a composite oxide for the purpose of improving cycle characteristics, where the composite material includes lithium and a transition metal, and the coating layer includes a metallic oxide and a compound including Li and P. However, since there is concern that certain elements may not be readily available, it is necessary to make it possible to form the coating layer from any of a variety of elements.

Based on the findings, the present inventors have achieved a secondary battery of the following present disclosure.

### (Outline of one aspect according to the present disclosure)

A secondary battery according to a first aspect of the present disclosure includes:
a positive electrode;
a negative electrode; and
an electrolytic solution, wherein
the positive electrode includes a positive electrode active material and a coating material coating at least a part of a surface of the positive electrode active material,
the coating material includes Li, Ti, M1, and X,
the M1 is at least one selected from the group consisting of Be, Mg, Ca, Sr, Ba, Sc, Y, Al, Ga, In, Zr, and Sn, and the X is at least one selected from the group consisting of F, Cl, Br, and I, and
the electrolytic solution includes an electrolyte and a non-aqueous solvent.

In the secondary battery according to the first aspect, the interfacial resistance between the electrolytic solution and the positive electrode active material is decreased, whereby the capacity is increased. Further, decomposition caused by a contact between the electrolytic solution and the positive electrode active material is suppressed, whereby the cycle characteristics can be improved.

In a second aspect of the present disclosure, for example, in the secondary battery according to the first aspect, the X may include F.

With this configuration, it is possible to improve capacity and cycle characteristics of the secondary battery.

In a third aspect of the present disclosure, for example, in the secondary battery according to the first or second aspect, the coating material includes a material represented by the following composition formula (2):

Li_{6-(4-a)b}(Ti₁₋ₐM1ₐ)_{b}X₆ ... Formula (2)

where 0 < a < 1 and 0 < b ≤ 2 may be satisfied.

With this configuration, it is possible to improve capacity and cycle characteristics of the secondary battery.

In a fourth aspect of the present disclosure, for example, in the secondary battery according to any one of the first to third aspect, a ratio of an amount of substance of Li to a sum of amounts of substance of Ti and M1 may be 0.5 or more and 4.5 or less.

With this configuration, it is possible to improve capacity and cycle characteristics of the secondary battery.

In a fifth aspect of the present disclosure, for example, in the secondary battery according to any one of the first to fourth aspects, the M1 may be Al.

Al is inexpensive and suitable as an element to improve the ionic conductivity of the coating material. With this configuration, it is possible to improve capacity and cycle characteristics of the secondary battery.

In a sixth aspect of the present disclosure, for example, in the secondary battery according to any one of the first to fifth aspects, the coating material may coat 80% or more of the surface of the positive electrode active material.

With this configuration, it is possible to improve capacity and cycle characteristics of the secondary battery.

In a seventh aspect of the present disclosure, for example, in the secondary battery according to the sixth aspect, the coating material may coat 95% or more of the surface of the positive electrode active material.

With this configuration, it is possible to improve capacity and cycle characteristics of the secondary battery.

In an eighth aspect the present disclosure, for example, in the secondary battery according to any one of the first to seventh aspects, the positive electrode active material may include a composite oxide including lithium and a transition metal.

With this configuration, it is possible to improve capacity and cycle characteristics of the secondary battery.

In a ninth the present disclosure, for example, in the secondary battery according to the eighth aspect, the composite oxide has a composition represented by the following composition formula (3):

LiNiₓ₁Co_{y1}M2_{1-x1-y1}O₂ ... Formula (3)

where 0 ≤ x1<1, 0 ≤ y1 ≤ 1, and 0 ≤ 1-x1-y1 ≤ 0.35 are satisfied, and the M2 may be at least one selected from the group consisting of Al and Mn.

With this configuration, it is possible to improve capacity and cycle characteristics of the secondary battery.

In a tenth aspect of the present disclosure, for example, in the secondary battery according to the eighth aspect, the composite oxide has a composition represented by the following composition formula (4):

LiNiₓ₂M3₁₋ₓ₂O₂ ... Formula (4)

where 0.3 ≤ x2 < 1 is satisfied, and the M3 may be at least one selected from the group consisting of Co, Mn, Al, Ti, and Fe.

With this configuration, it is possible to improve capacity and cycle characteristics of the secondary battery.

In an eleventh aspect of the present disclosure, for example, in the secondary battery according to the eighth aspect, the composite oxide has a composition represented by the following composition formula (5):

Liₓ₃M4_{y3}(PO₄)_{z3} ... Formula (5)

where 2.7 ≤ x3 ≤ 3.3, 0.9 ≤ y3 ≤ 2.2, and 0.9 ≤ z3 ≤ 3.3 are satisfied, and the M4 may be at least one selected from the group consisting of Ni, Co, Mn, Fe, and V.

With this configuration, it is possible to improve capacity and cycle characteristics of the secondary battery.

In a twelfth aspect of the present disclosure, for example, in the secondary battery according to any one of the first to eleventh aspects, the secondary battery may be free of a solid electrolyte except a solid electrolyte included as the coating material.

With this configuration, it is possible to improve capacity and cycle characteristics of the secondary battery.

Hereinafter, embodiments of the secondary battery according to the present disclosure will be explained. The present disclosure is not limited to the following embodiments.

A secondary battery according to an embodiment of the present invention includes a positive electrode, a negative electrode, and an electrolytic solution. The positive electrode includes a positive electrode active material and a coating material coating at least a part of the surface the positive electrode active material. The coating material includes Li, Ti, M1, and X, where the M1 is at least one selected from the group consisting of Be, Mg, Ca, Sr, Ba, Sc, Y, Al, Ga, In, Zr, and Sn, and the X is at least one selected from the group consisting of F, Cl, Br, and I. The electrolytic solution includes an electrolyte and a non-aqueous solvent.

With this configuration, the interfacial resistance between the electrolytic solution and the positive electrode active material decreases, so that the capacity of the secondary battery will be increased. Further, decomposition of the electrolytic solution, which is caused by a contact between the electrolytic solution and the positive electrode active material, may be suppressed, whereby the cycle characteristics of the secondary battery will be improved.

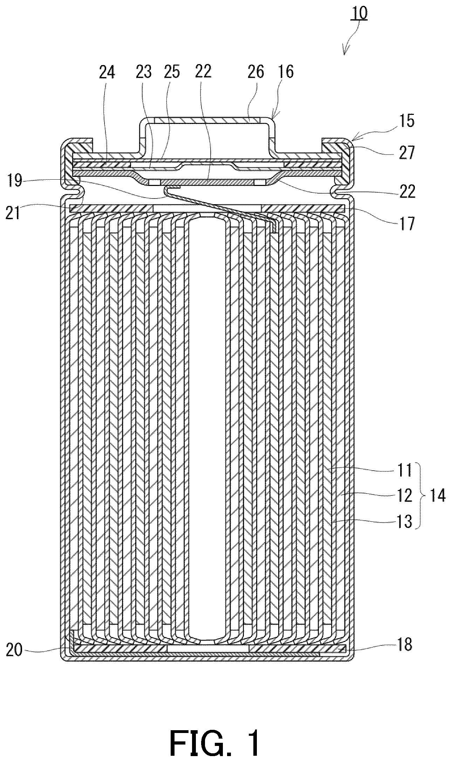

FIG. 1 is a longitudinal cross-sectional view schematically showing a secondary battery 10 according to an embodiment of the present disclosure. As shown in FIG. 1, the secondary battery 10 is a cylindrical battery including a cylindrical battery case, a wound type electrode group 14, and an electrolytic solution (not shown). The electrode group 14 is housed in the battery case, and in contact with the electrolytic solution.

The battery case is formed of a case main body 15, which is a bottomed cylindrical metal container, and a sealing body 16 configured to seal an opening portion of the case main body 15. A gasket 27 is disposed between the case main body 15 and the sealing body 16. The gasket 27 ensures airtightness of the battery case. Inside the case main body 15, an insulating plate 17 is disposed at one end of the electrode group 14 while an insulating plate 18 is disposed at the other end of the electrode group 14 in the winding axis direction of the electrode group 14.

The case main body 15 has, for example, a stepped portion 21. The stepped portion 21 can be formed by pressing partly the side wall of the case main body 15 from the outside. The stepped portion 21 may be annularly formed on the side wall of the case main body 15 along the circumferential direction of a virtual circle defined by the case main body 15. At this time, the sealing body 16 is supported, for example, by the surface of the stepped portion 21 facing the opening portion.

The sealing body 16 includes a filter 22, a lower valve plate 23, an insulating member 24, an upper valve plate 25, and a cap 26. In the sealing body 16, these members are stacked in this order. The sealing body 16 is attached to the opening portion of the case main body 15 so that the cap 26 will be positioned outside the case main body 15 while the filter 22 will be positioned inside the case main body 15.

These members for forming the sealing body 16 are each shaped like a disc or a ring, for example. Excepting the insulating member 24, these members are electrically connected to each other.

The electrode group 14 includes a positive electrode 11, a negative electrode 12, and a separator 13. The positive electrode 11, the negative electrode 12, and separator 13 are all strip-shaped. The width direction of the strip-shaped positive electrode 11 and the strip-shaped negative electrode 12 is, for example, parallel to the winding axis of the electrode group 14. The separator 13 is disposed between the positive electrode 11 and the negative electrode 12. The positive electrode 11 and the negative electrode 12 are spirally wound with the separator 13 interposed between these electrodes.

In an observation of the secondary battery 10, specifically, the cross section thereof in a direction perpendicular to the winding axis of the electrode group 14, the positive electrode 11 and the negative electrode 12 are laminated alternately in the radial direction of the virtual circle defined by the case main body 15, with the separator 13 interposed between these electrodes.

The positive electrode 11 is electrically connected to the cap 26 with a positive electrode lead 19 interposed therebetween, where the cap 26 serves also as a positive electrode terminal. One end of the positive electrode lead 19 is connected, for example, to the positive electrode 11 at or around the center in the longitudinal direction of the positive electrode 11. The positive electrode lead 19 extends from the positive electrode 11 to the filter 22, passing a through hole formed on the insulating plate 17. The other end of the positive electrode lead 19 is welded, for example, to a surface of the filter 22 facing the electrode group 14.

The negative electrode 12 is electrically connected to the case main body 15 via a negative electrode lead 20, where the case main body 15 serves also as a negative electrode terminal. One end of the negative electrode lead 20 is connected, for example, to the end of the negative electrode 12 in the longitudinal direction of the negative electrode 12. The other end of the negative electrode lead 20 is welded, for example, to the inner bottom surface of the case main body 15.

Each component of the secondary battery 10 will be specifically described below.

### (Positive electrode 11)

The positive electrode 11 is capable of occluding or releasing lithium. The positive electrode 11 includes a positive electrode active material, and a coating material for coating at least a part of the surface of the positive electrode active material.

The coating material includes Li, Ti, M1, and X. Here, the M1 is at least one selected from the group consisting of Be, Mg, Ca, Sr, Ba, Sc, Y, Al, Ga, In, Zr, and Sn, and the X is at least one selected from the group consisting of F, Cl, Br, and I.

For improving the ionic conductivity, the coating material may include any anion other than the X. Examples of the anion other than the X is at least one selected from the group consisting of O and Se.

The coating material may consist essentially of Li, Ti, M1, and the X. Here, "a coating material consists essentially of Li, Ti, M1, and the X" means that a fraction of a sum of amounts of substance of Li, Ti, M1, and X to a sum of amounts of substance of all the elements that form the coating material (i.e., mole fraction) is 90% or more. For example, the fraction may be 95% or more. The coating material may consist of Li, Ti, M1, and X.

The X may include F. The X may be F.

Inclusion of F may improve oxidation resistance of the coating material. Suppressing oxidative decomposition of the coating material can suppress increase of internal resistance of the battery, whereby the capacity of the secondary battery can be increased further.

In order to improve the ionic conductivity of the coating material, the ratio of the amount of substance of Li to the sum of the amounts of substance of Ti and M1 may be 0.5 or more and 4.5 or less.

The ratio of the amount of substance of the X to the sum of the amounts of substance of Li, Ti, M1 and the X may be 0.4 or more and 0.8 or less, or may be 0.5 or more and 0.7 or less.

The coating material may include a material represented by the following composition formula (1).

Li_{α}Ti_{β}M1_{γ}X_{δ} ... Formula (1)

Here, α, β, γ, and δ indicate values greater than 0.

In the composition formula (1), δ may be a value greater than α. The δ may be a value greater than each of the values of α, β, and γ.

In the composition formula (1), 1.7 ≤ α ≤ 3.7, 0 < β < 1.5, 0 < γ < 1.5, and 5 ≤ δ ≤ 7 may be satisfied.

In the composition formula (1), 2.5 ≤ α ≤ 3, 0.1 ≤ β ≤ 0.6, 0.4 ≤ γ ≤ 0.9, and 5 <δ ≤ 6 may be satisfied.

The coating material may include, as a main component, a material represented by the composition formula (1). Here, the term "main component" refers to a component that is included in the largest amount by mass.

The coating material includes a material represented by the following composition formula (2).

Li_{6-(4-a)b}(Ti₁₋ₐM1ₐ)_{b}X₆ ... Formula (2)

Here, 0 < a < 1 and 0 < b ≤ 2 may be satisfied.

In order to improve the ionic conductivity of the coating material, 0.1 ≤ a ≤ 0.9 and 0.8 ≤ b ≤ 1.2 may be satisfied, or 0.5 ≤ a ≤ 0.9 and 0.8 ≤ b ≤ 1.2 may be satisfied in Formula (2).

The M1 may include Al. The M1 may be Al.

The coating material coating at least a part of the surface of the positive electrode active material may have a thickness of 1 nm or more and 500 nm or less.

In a case where the thickness of the coating material is 1 nm or more, it is possible to suppress direct contact between the positive electrode active material and the electrolytic solution, thereby suppressing oxidative decomposition of the electrolytic solution. It is therefore possible to improve the charge and discharge efficiency of the battery. And in a case where the thickness of the coating material is 500 nm or less, the coating material is not excessively large in thickness. It is therefore possible to sufficiently decrease the internal resistance of the battery, thereby enhancing the energy density of the battery.

Though the method for measuring the thickness of the coating material is not particularly limited, for example, a transmission electron microscope or the like can be used to directly observe the coating material and thus to determine the thickness.

A ratio of a mass of the coating material to a mass of the positive electrode active material may be 0.01% or more and 30% or less.

In a case where the ratio of the mass of the coating material to the mass of the positive electrode active material is 0.01% or more, it is possible to suppress direct contact between the positive electrode active material and the electrolytic solution, thereby suppressing oxidative decomposition of the electrolytic solution. It is therefore possible to improve the charge and discharge efficiency of the battery. And in a case where the ratio of the mass of the coating material to the mass of the positive electrode active material is 30% or less, the coating material is not excessively large in thickness. It is therefore possible to sufficiently decrease the internal resistance of the battery, thereby enhancing the energy density of the battery.

The coating material may uniformly coat the surface of the positive electrode active material. This may make it possible to suppress direct contact between the positive electrode active material and the electrolyte, thereby suppressing oxidative decomposition of the electrolyte. It is therefore possible to further improve the charge and discharge characteristics of the battery and suppress an increase in the internal resistance of the battery during charge.

The coating material may coat a part of the surface of the positive electrode active material. Particles of the positive electrode active material are in direct contact with each other through their parts that are not coated with the coating material, thereby improving the electronic conductivity between the particles of the positive electrode active material. This enables the battery to operate at a high output.

The coating material may coat 30% or more of the surface of the positive electrode active material, may coat 60% or more thereof, may coat 80% or more thereof, may coat 90% or more thereof, or may coat 95% or more thereof. The coating material may coat substantially the entire surface of the positive electrode active material.

The positive electrode active material is a material capable of occluding or releasing lithium. The positive electrode active material may include a composite oxide that includes lithium and a transition metal. The transition metal may include at least one selected from the group consisting of nickel (Ni), cobalt (Co), manganese (Mn), iron (Fe), copper (Cu), chromium (Cr), titanium (Ti), niobium (Nb), zirconium (Zr), vanadium (V), tantalum (Ta), and molybdenum (Mo). Hereinafter, the term "composite oxide" means a composite oxide including lithium and a transition metal.

A composite oxide may be synthesized utilizing a coprecipitation process or the like. For example, a composite oxide is obtained by mixing a lithium compound and a transition metal obtained by a coprecipitation process or the like, and firing the thus obtained mixture under certain conditions. In the composite oxide, usually, a plurality of primary particles are agglomerated to form secondary particles. The average particle size (D50) of the composite oxide particles is, for example, 3 µm or more and 25 µm or less. Here, an average particle size (D50) means the particle size at which the volume-integrated value is 50% in the volume-based particle size distribution measured by the laser diffraction-scattering method (volume average particle diameter).

The composite oxide may include any metal other than a transition metal. The metal other than a transition metal may be at least one selected from the group consisting of aluminum (Al), magnesium (Mg), calcium (Ca), strontium (Sr), zinc (Zn), and silicon (Si). The composite oxide may further include boron (B) or the like other than the metals.

From the viewpoint of increasing capacity, the transition metal may include Ni. The composite oxide may include Ni and at least one selected from the group consisting of Co, Mn, Al, Ti and Fe. From the viewpoint of increasing capacity and increasing output, in particular, the composite oxide may include Ni and at least one selected from the group consisting of Co, Mn and Al, or the composite oxide may include Ni, Co, and at least one selected from the group consisting of Mn and Al. In a case where the composite oxide further includes Co in addition to Li and Ni, during charge and discharge, phase transition of the composite oxide including Li and Ni may be suppressed, stability of the crystal structure may be improved, and the cycle characteristics may be easily improved. In a case where the composite oxide further includes at least one selected from the group consisting of Mn and Al, the thermal stability will be improved.

From the viewpoint of easily increasing the capacity, in the composite oxide, the atomic ratio of Ni to a sum of the metals other than Li (Ni/Me) may be 0.3 or more and less than 1, or may be 0.5 or more and less than 1.

From the viewpoint of improving the cycle characteristics and increasing the output, the composite oxide may include a composite oxide having a layered rock-salt type crystal structure and including at least one selected from the group consisting of Ni and Co. Alternatively, the composite oxide may include a composite oxide having a spinel type crystal structure and including Mn. From the viewpoint of increasing the capacity, the composite oxide may be a composite oxide having a layered rock-salt type crystal structure and including Ni and a metal other than Ni, where the atomic ratio of Ni to a sum of the metals other than Li (Ni/Me) is 0.3 or more and less than 1 (hereinafter, this may be called also a nickel-based composite oxide).

The nickel-based composite oxide has a relatively instable crystal structure. Therefore, the composite oxide is likely to deteriorate due to Ni elution or the like caused by contact with a non-aqueous electrolyte at a positive electrode at a high potential, whereby the cycle characteristics may easily deteriorate. For this reason, in a case of a nickel-based composite oxide, the effect of coating with the coating material is remarkable in improving the cycle characteristics. By coating with the coating material, the high capacity of the nickel-based composite oxide can be fully utilized.

From the viewpoint of improving the cycle characteristics, increasing the capacity and increasing the output, the composite oxide may have a composition represented by the following composition formula (3).

LiNiₓ₁Co_{y1}M2_{1-x1-y1}O₂ ... Formula (3)

Here, 0.3 ≤ x1 < 1, 0 < y1 ≤ 0.5 and 0 < 1-x1-y1 ≤ 0.35 may be satisfied, and the M2 may be at least one selected from the group consisting of Al and Mn. In the composition formula (3), 0.5 ≤ x1 < 1 may be satisfied. In the composition formula (3), 0 < y1 ≤ 0.35 may be satisfied.

The composite oxide has a composition represented by the following composition formula (4).

LiNiₓ₂M3₁₋ₓ₂O₂ ... Formula (4)

Here, 0.3 ≤ x2 < 1 is satisfied, and the M3 may be at least one selected from the group consisting of Co, Mn, Al, Ti, and Fe. In a case where the x2 is within this range, the effect imparted by Ni and the effect imparted by the element M3 are well balanced.

In the composition formula (4), x2 may be 0.5 or more, or 0.75 or more.

The composite oxide has a composition represented by the following composition formula (5).

Liₓ₃M4_{y3}(PO₄)_{z3} ... Formula (5)

Here, 2.7 ≤ x3 ≤ 3.3, 0.9 ≤ y3 ≤ 2.2, and 0.9 ≤ z3 ≤ 3.3 may be satisfied, and the M4 may be at least one selected from the group consisting of Ni, Co, Mn, Fe, and V.

At least a part of the surface of the composite oxide may be coated with another coating material that is different from the aforementioned coating material. An example of the other coating material is an oxide. Examples of the oxide to be used for the other coating material include: Li-Nb-O compounds such as LiNbOs; Li-B-O compounds such as LiBO₂, and LisBOs; Li-Al-O compounds such as LiAlO₂; Li-Si-O compounds such as Li₄SiO₄; Li-S-O compounds such as Li₂SO₄; Li-Ti-O compounds such as Li₄Ti₅O₁₂; Li-Zr-O compounds such as Li₂ZrO₃; Li-Mo-O compounds such as Li₂MoO₃; Li-V-O compounds such as LiV₂O₅; Li-W-O compounds such as Li₂WO₄; and Li-P-O compounds such as Li₃PO₄.

With the aforementioned configuration, the oxidation resistance of the positive electrode active material can be further improved. This makes it possible to suppress the increase in the battery's internal resistance during charging.

A coating material in a secondary battery according to an embodiment and a positive electrode active material whose surface is to be coated at least partly with the coating material can be manufactured by, for example, the following process.

Raw material powders of binary halides are prepared to have a target composition blend ratio for the coating material. In a case of producing Li_{2.7}Ti_{0.3}Al_{0.7}F₆, for example, LiF, NbF₅, and AlF₃ are prepared in an approximate molar ratio of LiF:TiF₄:AlF₃ = 2.7:0.3:0.7. The raw material powders may be mixed in a molar ratio adjusted in advance so as to cancel out a composition change that can occur in the synthesis process.

The raw material powders are thoroughly mixed, and then, the raw material powders are mixed, pulverized, and reacted with each other by mechanochemical milling. Afterwards, the raw material powders may be fired in a vacuum or in an inert atmosphere. Alternatively, the raw material powders may be thoroughly mixed and then fired in a vacuum or inert atmosphere. The firing is preferably conducted for example, at a temperature of 100°C or higher and 300°C or lower for 1 hour or longer. In order to suppress a composition change during the firing, preferably the raw material powders are put into a sealed container like a quartz tube and fired.

In this way, a coating material including the aforementioned composition can be obtained.

Next, a composite oxide as the positive electrode active material is prepared so that a predetermined mass ratio may be achieved. For example, Li(NiCoMn)O₂ is prepared as the composite oxide. The Li(NiCoMn)O₂ and the coating material Li_{2.7}Ti_{0.3}Al_{0.7}F₆ are put into the same reaction vessel, and a shear force is applied to the two materials with rotating blades. Alternatively, a jet stream may be used to collide the two materials with each other. In this way, at least a part of the surface of the composite oxide Li(NiCoMn)O₂ can be coated with Li_{2.7}Ti_{0.3}Al_{0.7}F₆ as a coating material. For example, equipment such as a dry particle composing machine NOBILTA (manufactured by Hosokawa Micron Corporation), a high-speed flow impact machine (manufactured by Nara Machinery Co., Ltd.), or a jet mill can be used therefor.

By any of these methods, it is possible to obtain a composite oxide Li(NiCoMn)O₂, which is a positive electrode active material with at least a part of the surface coated with the coating material. It should be noted that the method for manufacturing a coating material and a coated positive electrode active material is not limited to the example.

A positive electrode 11 may include a positive electrode current collector and a positive electrode compounding agent layer supported on the surface of the positive electrode current collector. The positive electrode compounding agent layer can be formed, for example, by coating a positive electrode slurry on the surface of the positive electrode current collector and drying, where the slurry is prepared by dispersing a positive electrode compounding agent in a dispersion medium. After the drying, the coating may be roll-pressed as required. The positive electrode compounding agent layer may be formed on either or both surfaces of the positive electrode current collector. For the dispersion medium, for example, N-methyl-2-pyrrolidone (NMP) or the like may be used.

The positive electrode compounding agent layer includes a positive electrode active material and a coating material coating at least a part of the surface of the positive electrode active material. The positive electrode compounding agent layer may further include a binder, and a conductive agent, for example.

The binder may be a resin material such as a fluorine resin, a polyolefin resin, a polyamide resin, a polyimide resin, an acrylic resin, or a vinyl resin. Examples of the fluorine resin include polytetrafluoroethylene (PTFE) and polyvinylidene fluoride (PVDF). One of the binders may be used alone, or two or more of the binders may be used in combination.

Examples of the conductive agent include: carbon black such as acetylene black; conductive fibers such as a carbon fiber and a metal fiber; and fluorinated carbon. One of the conductive agents may be used alone, or two or more of the conductive agents may be used in combination.

For the positive electrode current collector, for example, a metallic foil can be used. Examples of metal for forming the positive electrode current collector include aluminum, titanium, alloys including any of these metal elements, and stainless steel. The thickness of the positive electrode current collector, though not particularly limited, for example, 3 µm or more and 50 µm or less.

### (Negative electrode 12)

A negative electrode 12 includes a material having properties of occluding and releasing metal ions (for example, lithium ions). The negative electrode 12 includes, for example, a negative electrode active material.

The negative electrode active material may include a carbon material capable of occluding and releasing lithium ions. Examples of carbon materials capable of occluding and releasing lithium ions include graphite (natural graphite, artificial graphite), graphitizable carbon (soft carbon), and non-graphitizable carbon (hard carbon). Among them, graphite is preferable because it has excellent charge and discharge stability and a small irreversible capacity.

The negative electrode active material may include an alloy-based material. An alloy-based material is a material including at least one metal capable of forming an alloy with lithium, and the examples include silicon, tin, a silicon alloy, a tin alloy, and a silicon compound. For the silicon compound, a composite material including a lithium ion conducting phase and silicon particles dispersed in the phase may be used. For the lithium ion conducting phase, a silicate phase such as a lithium silicate phase, a silicon oxide phase including 95 mass% or more of a silicon dioxide, a carbon phase or the like may be used.

For the negative electrode active material, an alloy-based material and a carbon material may be used in combination. In this case, the proportion of the carbon material in the sum of the alloy-based material and the carbon material may be, for example, 80 mass% or more, or 90 mass% or more.

The negative electrode active material may include lithium titanium oxide. The lithium titanium oxide may include at least one selected from the group consisting of Li₄Ti₅O₁₂, Li₇Ti₅O₁₂, and LiTi₂O₄. The lithium titanium oxide may further include TiO₂.

For the negative electrode active material, an alloy-based material and a carbon material may be used in combination, or lithium titanium oxide and a carbon material may be used in combination.

The shape and the thickness of the negative electrode current collector can be selected respectively from the shape and thickness conforming to those of the positive electrode current collector. Examples of metal for forming the negative electrode current collector include copper (Cu), nickel (Ni), iron (Fe), and an alloy including any of these metal elements.

The negative electrode may include a negative electrode current collector and a negative electrode compounding agent layer supported on the surface of the negative electrode current collector. The negative electrode compounding agent layer can be formed, for example, by coating a negative electrode slurry on the surface of the negative electrode current collector and drying, where the slurry is prepared by dispersing a negative electrode compounding agent in a dispersion medium After the drying, the coating may be roll-pressed as required. The negative electrode compounding agent layer may be formed on either or both surfaces of the negative electrode current collector. For the dispersion medium, for example, water, or NMP may be used.

The negative electrode compounding agent layer includes a negative electrode active material. The negative electrode compounding agent layer may include further, for example, a binder, a conductive agent, or a thickener. For the binder and the conductive agent, those exemplified for the positive electrode can be used. Rubber materials such as styrene-butadiene copolymer rubber (SBR) also may be used for the binder. Examples of the thickener include carboxymethyl cellulose (CMC) and its modified form (Na salt etc.).

### (Electrolytic solution)

An electrolytic solution includes a non-aqueous solvent and an electrolyte. The electrolytic solution may include a non-aqueous solvent and lithium salt dissolved in the non-aqueous solvent. The concentration of the lithium salt in the electrolytic solution may be, for example, 0.5 mol/liter or more and 2 mol/liter or less. By controlling the lithium salt concentration within the aforementioned range, it is possible to obtain an electrolytic solution excellent in ionic conductivity and having moderate viscosity, though the lithium salt concentration is not limited to the range.

For the non-aqueous solvent, for example, cyclic carbonate, chain carbonate, cyclic carboxylate, chain carboxylate or the like can be used. Examples of the cyclic carbonate include propylene carbonate (PC) and ethylene carbonate (EC). The cyclic carbonate may include fluorinated cyclic carbonates such as fluoroethylene carbonate (FEC), or cyclic carbonate having carbon-carbon unsaturated bonds, such as vinylene carbonate (VC) and vinyl ethylene carbonate. Examples of the chain carbonate include diethyl carbonate (DEC), ethyl methyl carbonate (EMC), and dimethyl carbonate (DMC). Examples of the cyclic carboxylate include γ-butyrolactone (GBL) and γ-valerolactone (GVL). Examples of the chain carboxylate include methyl formate, ethyl formate, propyl formate, methyl acetate, ethyl acetate, propyl acetate, methyl propionate, ethyl propionate, and propyl propionate. One of the non-aqueous solvents may be used alone, or two or more of the non-aqueous solvents may be used in combination.

For the lithium salt, any known lithium salts can be used. Examples of preferred lithium salt include LiClO₄, LiBF₄, LiPF₆, LiAlCl₄, LiSbF₆, LiSCN, LiCF₃SO₃, LiCF₃CO₂, LiAsF₆, LiB₁₀Cl₁₀, lower aliphatic carboxylic acid lithium, LiCl, LiBr, Lil, boric acid salts, and imide salts. Examples of the borate include bis(1,2-benzenediolate(2-)-O,O') lithium borate, bis(2,3-naphthalenediolate(2-)-O,O') lithium borate, bis(2,2'-biphenyldiolate(2-)-O,O') lithium borate, and bis(5-fluoro-2-olate-1 -benzenesulfonic acid-O,O') lithium borate. Examples of the imide salts include lithium bis(fluorosulfonyl)imide (LiN(FSO₂)₂), bistrifluoromethane sulfonic acid imide lithium (LiN(CF₃SO₂)₂), trifluoromethane sulfonic acid nonafluorobutane sulfonic acid imide lithium (LiN(CF₃SO₂)(C₄F₉SO₂)), and bispentafluoroethane sulfonic acid imide lithium (LiN(C₂F₅SO₂)₂). One of the lithium salts may be used alone, or two or more of the lithium salts may be used in combination.

### (Separator 13)

It is usually preferable that a separator is interposed between the positive electrode and the negative electrode. A separator 13 has high ion permeability, moderate mechanical strength and insulating properties. For the separator 13, a microporous membrane, a woven fabric, a non-woven fabric or the like, can be used. For the material of the separator 13, for example, a polymer can be used. The polymer may be, for example, polyolefin such as polypropylene or polyethylene.

In a secondary battery of the present disclosure, for example, the polymer provided as the separator may be impregnated with the electrolytic solution. That is, the secondary battery of the present disclosure may have a structure where an electrolytic solution and a polymer are used in combination.

The secondary battery of the present disclosure may further include a solid electrolyte as an electrolyte. That is, the secondary battery of the present disclosure may have a hybrid structure for using an electrolytic solution and a solid electrolyte in combination. Examples of the solid electrolyte include halide solid electrolyte, sulfide solid electrolyte, oxide solid electrolyte, and organic polymer solid electrolyte. In the present disclosure, the term "halide solid electrolyte" means a solid electrolyte including a halogen element as a main component of anions. The term "sulfide solid electrolyte" means a solid electrolyte including sulfur as a main component of anions. And the term "oxide solid electrolyte" means a solid electrolyte including oxygen as a main component of anions. The main component of the anions means an anion having the largest amount of substance among all the anions forming the solid electrolyte. The coating material in the secondary battery of the present disclosure may include a halide solid electrolyte.

The secondary battery of the present disclosure may be free of a solid electrolyte, except a solid electrolyte included as a coating material. The secondary battery of the present disclosure may be free of a solid electrolyte as an electrolyte.

In the embodiment of the present disclosure, as a structural example of the secondary battery, the structural example shown in FIG. 1 is explained. The secondary battery 10 has an electrode group and an electrolytic solution both of which are housed in an exterior body, where the electrode group is prepared by winding a positive electrode and a negative electrode with a separator interposed therebetween. However, the secondary battery according to the present disclosure will not be limited to this structural example. The secondary battery according to the present disclosure may have a shape of, for example, a cylindrical type, a prismatic type, a coin type, a button type, a laminate type, or the like. Further, as an electrode group in a secondary battery according to the present disclosure, the winding type electrode group may be replaced by any other type of electrode group, for example, a stacked type electrode group where a positive electrode and a negative electrode are stacked with a separator interposed therebetween.

Hereinafter, the present invention will be explained specifically with regard to Examples and Comparative Examples, though the present invention is not limited to the following Examples.

### EXAMPLES

### (Example 1)

### [Production of positive electrode]

In an argon atmosphere, raw material powders of LiF, TiF₄, and AlF₃ were weighed in a molar ratio of LiF:TiF₄:AlF₃ = 2.7:0.3:0.7. Next, the powders were subjected to a milling process in a planetary ball mill (Type P-7 manufactured by Fritsch GmbH) at 500 rpm for 12 hours. Thus, a powder of Li_{2.7}Ti_{0.3}Al_{0.7}F₆ was obtained as a coating material in Example 1.

Composite oxide particles (average particle diameter (D50): 5 µm) having a layered rock salt type LiNi_{0.6}Co_{0.2}Mn_{0.2} (NCM) composition as the positive electrode active material and Li_{2.7}Ti_{0.3}Al_{0.7}F₆ were weighed in a mass ratio of NCM : Li_{2.7}Ti_{0.3}Al_{0.7}F₆ = 100:3. These materials were introduced into a dry particle composing machine NOBILTA (manufactured by Hosokawa Micron Corporation) so as to conduct a composing process at 6000 rpm for 30 minutes, thereby obtaining a positive electrode active material having a surface coated with a coating material.

Next, the positive electrode active material coated with the coating material, acetylene black (AB), and polyvinylidene fluoride (PVDF) were weighed in a mass ratio of the coated positive electrode active material: AB : PVDF = 90:7:3, thereby providing a positive electrode compounding agent. To this positive electrode compounding agent, N-methyl-2-pyrrolidone (NMP) was added and stirred to prepare a positive electrode slurry.

The positive electrode slurry was coated on the surface of an aluminum foil, the coated film was dried and then roll-pressed to form a positive electrode compounding agent layer. The positive electrode compounding agent layer was formed on one surface of the aluminum foil.

### [Production of negative electrode]

Lithium titanate, acetylene black (AB), and polyvinylidene fluoride (PVDF) were mixed in a mass ratio of lithium titanate : AB : PVDF = 90:7:3, thereby producing a negative electrode compounding agent. To this negative electrode compounding agent, N-methyl-2-pyrrolidone (NMP) was added and stirred to prepare a negative electrode slurry.

The negative electrode slurry was coated on the surface of the aluminum foil, the coated film was dried and then roll-pressed to form a negative electrode compounding agent layer. The negative electrode compounding agent layer was formed on one surface of the aluminum foil.

### [Preparation of electrolytic solution]

LiPF₆ was dissolved in a mixed solvent obtained by mixing fluoroethylene carbonate (FEC) and dimethyl carbonate (DMC) in a volume ratio of FEC : DMC = 2:8, thereby obtaining an electrolytic solution. The concentration of LiPF₆ in the electrolytic solution was set to 1 mol/liter.

### [Production of secondary battery]

To the thus obtained positive electrode, an Al-made positive electrode lead was attached. To the thus obtained negative electrode, an Al-made negative electrode lead was attached. In a low dew point atmosphere with a dew point of -50°C, the positive electrode and the negative electrode were wound with a polyethylene thin film as a separator interposed therebetween so as to produce a wound-type electrode group.

The electrode group was housed in a bag-shaped exterior body formed of a laminate sheet including an Al layer, into which the electrolytic solution was poured and the exterior body was sealed. At a time of housing the electrode group is housed in the exterior body, the positive electrode lead and the negative electrode lead were each partly exposed outside the exterior body. In this way, a battery of Example 1 was obtained.

### (Comparative Example 1)

In Comparative Example 1, a coating material was not used in production of a positive electrode. Namely, a positive electrode active material was not coated with a coating material. The positive electrode active material, acetylene black (AB), and polyvinylidene fluoride (PVDF) were mixed in a mass ratio of positive electrode active material: AB : PVDF = 90:7:3, thereby producing a positive electrode compounding agent. A battery of Comparative Example 1 was produced in the same manner as Example 1 excepting the aforementioned points.

### [Evaluation 1: charge and discharge capacity]

### (1) Charge and discharge

A charge and discharge test was conducted as follows, using the batteries of Example 1 and Comparative Example 1. The batteries were charged with a constant current of 0.2 C until the voltage reached 2.75 V, and then charged with a constant voltage of 2.75 V until the current reached 0.05 C. After that, constant current discharge was conducted with a current of 0.2 C until the voltage reached 0.95 V. The rest time between charge and discharge was 60 minutes. The charge and discharge were conducted in an environment of 25°C. A cycle test was conducted, where the above charge and discharge cycle was regarded as one cycle.

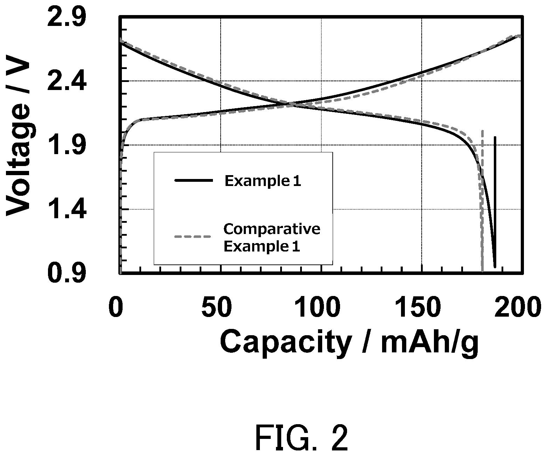

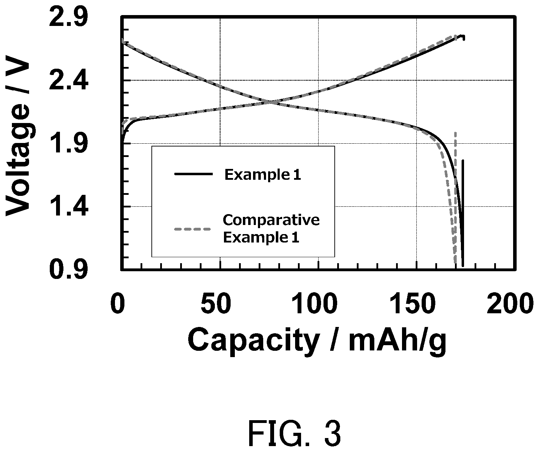

FIG. 2 is a graph showing the charge and discharge curves at a first cycle of the batteries of Example 1 and Comparative Example 1. FIG. 3 is a graph showing the charge and discharge curves at a 50^{th} cycle of the batteries of Example 1 and Comparative Example 1.

### (2) Measurement of discharge capacity over cycles

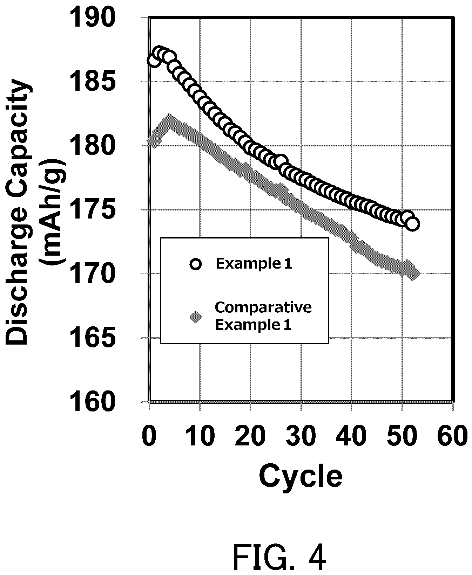

In the cycle test, transitions of discharge capacity were measured up to a 52^{nd} cycle. FIG. 4 is a graph showing transitions of discharge capacity of batteries of Example 1 and Comparative Example 1.

### [Evaluation 2: measurement of internal resistance at the third cycle and the 50^{th} cycle]

As for the batteries of Example 1 and Comparative Example 1, these batteries were charged after the third and the 50^{th} cycle of charge and discharge so as to obtain SOC of 50%, and the voltage drop ΔV at the start of constant current discharge at a current I of 0.3 C was measured. A calculated ΔV/I was determined as the internal resistance.

Table 1 shows the relative values of the internal resistance of the batteries of Example 1 and Comparative Example 1 after the third cycle and after the 50^{th} cycle, where the internal resistance of the battery in Example 1 after the third cycle is determined as 1.

**[Table 1]**

| | Internal resistance after 3^{rd} cycle | Internal resistance after 50^{th} cycle |
|---|---|---|
| Example1 | 1.00 | 1.30 |
| Comparative Example 1 | 1.05 | 1.71 |

The discharge capacity in Example 1 was higher than the discharge capacity in Comparative Example 1. After the 50^{th} cycle, the discharge capacity in Example 1 was still higher than the discharge capacity in Comparative Example 1. Moreover, the internal resistance measurement showed that the internal resistance in Example 1 was lower than the internal resistance in Comparative Example 1. It is presumed that this effect contributes to the fact that Example 1 has a higher discharge capacity than the discharge capacity in Comparative Example 1. Also, the increase in resistance after the 50^{th} cycle in Example 1 is smaller than the increase in resistance in Comparative Example 1. It is presumed that this contributes to maintaining the discharge capacity.

### INDUSTRIAL APPLICABILITY

The secondary battery according to the present disclosure is used suitably, for example, as electric power sources for mobile devices such as smartphones, power sources for automobiles such as electric vehicles, and storage units for natural energy such as sunlight.

## Claims

1. A secondary battery comprising:
a positive electrode;
a negative electrode; and
an electrolytic solution, wherein
the positive electrode includes a positive electrode active material and a coating material coating at least a part of a surface of the positive electrode active material,
the coating material includes Li, Ti, M1, and X,
the M1 is at least one selected from the group consisting of Be, Mg, Ca, Sr, Ba, Sc, Y, Al, Ga, In, Zr, and Sn, and the X is at least one selected from the group consisting of F, Cl, Br, and I, and
the electrolytic solution includes an electrolyte and a non-aqueous solvent.

2. The secondary battery according to claim 1, wherein
the X includes F.

3. The secondary battery according to claim1 or 2, wherein
the coating material includes a material represented by the following composition formula 2,
Li_{6-(4-a)b}(Ti₁₋ₐM1ₐ)_{b}X₆ ... Formula (2)
where 0 < a < 1 and 0 < b ≤ 2 are satisfied.

4. The secondary battery according to any one of claims 1 to 3, wherein
in the coating material, a ratio of an amount of substance of Li to a sum of amounts of substance of Ti and the M1 is 0.5 or more and 4.5 or less.

5. The secondary battery according to any one of claims 1 to 4, wherein
the M1 is Al.

6. The secondary battery according to any one of claims 1 to 5, wherein
the coating material coats 80% or more of the surface of the positive electrode active material.

7. The secondary battery according to claim 6, wherein
the coating material coats 95% or more of the surface of the positive electrode active material.

8. The secondary battery according to any one of claims 1 to 7, wherein
the positive electrode active material includes a composite oxide including lithium and a transition metal.

9. The secondary battery according to claim 8, wherein
the composite oxide includes a composition represented by the following composition formula (3):
LiNiₓ₁Co_{y1}M2_{1-x1-y1}O₂ ... Formula (3)
where 0 ≤ x1<1, 0 ≤ y1 ≤ 1, and 0 ≤ 1-x1-y1 ≤ 0.35 are satisfied, and the M2 is at least one selected from the group consisting of Al and Mn.

10. The secondary battery according to claim 8, wherein
the composite oxide has a composition represented by the following composition formula (4):
LiNiₓ₂M3₁₋ₓ₂O₂ ... Formula (4)
where 0.3 ≤ x2 < 1 is satisfied, and the M3 is at least one selected from the group consisting of Co, Mn, Al, Ti, and Fe.

11. The secondary battery according to claim 8, wherein
the composite oxide has a composition represented by the following composition formula (5):
Liₓ₃M4_{y3}(PO₄)_{z3} ... Formula (5)
where 2.7 ≤ x3 ≤ 3.3, 0.9 ≤ y3 ≤ 2.2, and 0.9 ≤ z3 ≤ 3.3 are satisfied, and the M4 is at least one selected from the group consisting of Ni, Co, Mn, Fe, and V.

12. The secondary battery according to any one of claims 1 to 11, wherein
the secondary battery is free of a solid electrolyte, except a solid electrolyte included as the coating material.
